# EUROPÄISCHE PATENTSCHRIFT

(11) **EP 3 999 817 B1**
(45) Veröffentlichungstag und Bekanntmachung des Hinweises auf die Patenterteilung: **01.11.2023**
(21) Anmeldenummer: 20733791.6
(22) Anmeldetag: 18.06.2020
(51) Int. Cl.: G01F 1/84

(54) **CORIOLIS-MESSAUFNEHMER UND CORIOLIS-MESSGERÄT MIT CORIOLIS-MESSAUFNEHMER**
CORIOLIS MEASURING SENSOR AND CORIOLIS MEASURING DEVICE HAVING A CORIOLIS MEASURING SENSOR
CAPTEUR DE MESURE À EFFET CORIOLIS ET APPAREIL DE MESURE À EFFET CORIOLIS COMPRENANT UN CAPTEUR DE MESURE À EFFET CORIOLIS

(30) Priorität: 16.07.2019 DE 102019119231
(43) Veröffentlichungstag der Anmeldung: 25.05.2022
(73) Patentinhaber: Endress + Hauser Flowtec AG, 4153 Reinach (CH)
(72) Erfinder: POHL, Johan, 79110 Freiburg (DE); BITTO, Ennio, 4147 Aesch (CH)
(74) Vertreter: Hahn, Christian
(86) Internationale Anmeldenummer: PCT/EP2020/066974
(87) Internationale Veröffentlichungsnummer: WO 2021/008808

(56) Entgegenhaltungen:
- EP-A1- 1 253 409
- WO-A1-97/26508
- WO-A1-2019/110353
- DE-A1-102015 120 087
- RU-C2- 2 155 939

## Beschreibung

Die Erfindung betrifft einen Coriolis-Messaufnehmer mit einer verbesserten Sensorik und ein Coriolis-Messgerät mit einem solchen Coriolis-Messaufnehmer.

Coriolis-Messgeräte zum Messen eines Massedurchflusses oder einer Dichte eines durch ein Messrohr des Messgeräts strömenden Mediums sind Stand der Technik, so zeigen die DE102015120087A1 und WO 97/26508 A1 beispielsweise ein Zweirohr-Coriolis-Messgerät, wobei Schwingungssensoren auf einer magnetischen Kopplung zwischen einer Spule und einem Magnet basieren.

Solche Coriolis-Messgeräte lassen sich durch Stören der magnetischen Kopplung, beispielsweise mittels eines externen Magnets manipulieren. Aber auch ein Betrieb eines Coriolis-Messgeräts in einem externen Magnetfeld führt zu Störungen der magnetischen Kopplung Ein externes Magnetfeld bewirkt bei vibrierenden Messrohren einerseits direkt eine Wechselspannung in mit dem Messrohr mitbewegten Spulen und andererseits Wirbelströme beispielsweise in Wandungen des Messrohrs, welche ein mittels der Spulen erfasstes Messsignal verfälschen.

Aufgabe der Erfindung ist es, einen Coriolis-Messaufnehmer und ein Coriolis-Messgerät mit einem solchen Coriolis-Messaufnehmer vorzuschlagen, bei welchen eine Manipulation mittels eines externen Magnets erschwert wird.

Die Aufgabe wird gelöst durch einen Coriolis-Messaufnehmer gemäß dem unabhängigen Anspruch 1 sowie durch ein Coriolis-Messgerät gemäß dem unabhängigen Anspruch 13.

Ein erfindungsgemäßer Coriolis-Messaufnehmer eines Coriolismessgeräts zum Messen eines Massedurchflusses oder einer Dichte eines durch Messrohre des Coriolis-Messaufnehmers strömenden Mediums umfasst:
mindestens ein Paar Messrohre zum Führen eines Mediums;
einen Trägerkörper zum Tragen der Messrohre;
mindestens einen Erreger eingerichtet zum Anregen von Messrohrschwingungen,
pro Messrohrpaar mindestens zwei Sensoren eingerichtet zum Erfassen von Messrohrschwingungen,
wobei die Messrohre eines jeweiligen Messrohrpaars in Ruhestellung symmetrisch bezüglich einer jeweiligen Mittenebene sind, wobei die Messrohre jedes Messrohrpaars dazu eingerichtet sind, Schwingungen senkrecht zur jeweiligen Mittenebene auszuführen und entgegengesetzt zu schwingen,
wobei jeder Sensor zumindest eine Magnetvorrichtung mit jeweils einem Permanentmagnet sowie zwei Spulenvorrichtungen mit jeweils einer Spule aufweist, wobei die Magnetvorrichtung sowie die Spulenvorrichtung jeweils an einem Messrohr angeordnet sind,
wobei mindestens eine Magnetvorrichtung dazu eingerichtet ist, durch Messrohrschwingungen relativ zu mindestens einer Spulenvorrichtung bewegt zu werden,
wobei Querschnittsflächen der Spulen gleich und parallel zueinander sind und in einer Projektion aufeinander einen Überlapp von mindestens 90% bezüglich ihrer Flächenmaße aufweisen,
wobei einander zugewandte Seiten der Spulen jeweils eine erste Stirnfläche definieren, wobei die ersten Stirnflächen einen Spulenabstand definieren, wobei ein Verhältnis Querschnittsfläche zu einem Quadrat des Spulenabstands beispielsweise größer ist als 10, und insbesondere größer ist als 30 und bevorzugt größer ist als 100,
wobei die Spulen jeweils ein inneres, der jeweils anderen Spule zugewandtes Ende und ein äußeres, der jeweils anderen Spule abgewandtes Ende aufweisen, und wobei die Spulen jeweils einen Windungssinn aufweisen,
wobei einem gegenläufigen Windungssinn der beiden Spulen ein negativer Windungskoeffizient zugeordnet ist, und wobei einem gleichläufigen Windungssinn der beiden Spulen ein positiver Windungskoeffizient zugeordnet ist, wobei das Vorzeichen des Windungskoeffizienten ein erstes Vorzeichen ist,
wobei die Spulen über ihre Enden miteinander in Reihe geschaltet sind, wobei einer Verschaltung der Spulen über beide inneren Enden oder über beide äußeren Enden ein positiver Schaltungskoeffizient zugeordnet ist, wobei einer Verschaltung der Spulen über ein inneres Ende und ein äußeres Ende ein negativer Schaltungskoeffizient zugeordnet ist, wobei das Vorzeichen des Schaltungskoeffizienten ein zweites Vorzeichen ist,
wobei ein Produkt aus erstem Vorzeichen, zweitem Vorzeichen negativ ist,
wobei der mindestens eine Permanentmagnet dazu eingerichtet ist, im Bereich der Spulen ein inhomogenes Magnetfeld mit einer senkrecht zu den Querschnittsflächen der Spulen stehenden Feldkomponente zu erzeugen.

Der Kern der Erfindung ist, dass magnetische Störfelder, welche in einiger Entfernung zum Sensor in der Messrohrwandung aufgrund der Schwingungen der Messrohre in einem externen Magnetfeld durch Wirbelströme entstehen, Wechselfelder sind und in einer ersten Näherung in Spulen unabhängig von ihrem Bewegungszustand elektrische Spannungen induzieren, wobei ein Einfluss einer Relativbewegung der Spulen bezüglich der Störfelder bei einer für Coriolis-Messaufnehmer typische kinetische Randbedingungen vernachlässigbar sind. Durch eine erfindungsgemäße Verschaltung der Spulen unter Berücksichtigung der Windungssinne werden die in den Spulen induzierten elektrischen Spannungen subtrahiert und somit in sehr guter Näherung ausgelöscht.

Spannungen, welche durch mindestens einen Permanentmagnet des Sensors in Spulen des Sensors induziert werden, sind hingegen direkt abhängig von einer Relativbewegung der Spulen zum entsprechenden Permanentmagnet, wobei bei Vorhandensein einer Magnetvorrichtung eine Messspannung in mindestens einer Spule induziert wird und bei der erfindungsgemäßen Verschaltung keine Auslöschung erfährt, und wobei bei Vorhandensein zweier Magnetvorrichtungen die in den Spulen induzierten Messspannungen aufgrund der erfindungsgemäßen Verschaltung und Anordnung addiert werden.

Durch eine erfindungsgemäße Verschaltung und Ausgestaltung der Spulen kann also die Wirkung der durch Wirbelströme erzeugten Störfelder auf die Spulen stark verringert werden, und gleichzeitig die durch die Magnetvorrichtungen induzierten Messspannungen addiert werden.

Eine direkt in den durch die Messrohre mitbewegten Spulen durch das externe Magnetfeld induzierte Spannung ist aus messtechnischer Sicht auch bei Coriolis-Messaufnehmern gemäß dem Stand der Technik unproblematisch, da sie in Phase zur durch die Magnetvorrichtungen induzierten Messspannung ist und keinen Durchfluss-Messfehler bewirkt.

Es hat sich dabei gezeigt, dass ein Nullpunktsfehler bei einem Coriolis-Messaufnehmer mit einem erfindungsgemäßen Sensor gegenüber den bekannten Coriolis-Messaufnehmern um einen Faktor größer als 10 verbessert werden kann. Der Nullpunktsfehler ist gegeben durch einen gemessenen Durchfluss bei tatsächlichem Nulldurchfluss.

Die Querschnittsfläche der Spulen bezieht sich dabei jeweils auf eine durch eine äußere Windung umfasste Fläche.

In einer Ausgestaltung weist der mindestens eine Permanentmagnet eine zu den Spulensystemen gerichtete zweite Stirnfläche auf, welche parallel zu den Querschnittsflächen der Spulen verläuft, wobei eine Größe der zweiten Stirnfläche um höchstens 50% von einer Größe der ersten Stirnfläche abweicht.

Damit ist ein Mindestmaß an Inhomogenität des durch den mindestens einen Permanentmagnet erzeugten Magnetfelds sichergestellt.

In einer Ausgestaltung weist die zweite Stirnfläche einen Maximalabstand zu einer Außenfläche einer nächsten Spule auf,
wobei der Maximalabstand kleiner ist als 5 Spulenabstände und insbesondere kleiner als 3 Spulenabstände und bevorzugt kleiner als 1.5 Spulenabstände,
   und/oder
wobei der Maximalabstand kleiner ist als 5 mm und insbesondere kleiner als 3 mm und bevorzugt kleiner als 1.5 mm.

Auf diese Weise ist eine ausreichende induktive Wirkung des mindestens einen Permanentmagnets sichergestellt.

In einer Ausgestaltung sind entweder die Windungssinne gegenläufig, und die Spulen über beide inneren Enden oder über beide äußeren Enden elektrisch verbunden,
oder
wobei die Windungssinne gleichläufig sind und die Spulen über ein inneres Ende und ein äußeres Ende elektrisch verbunden sind.

In einer Ausgestaltung ist eine erste Magnetvorrichtung an einem ersten Messrohr eines Messrohrpaars angeordnet und dazu eingerichtet ist, den Schwingungsbewegungen des ersten Messrohrs zu folgen, wobei der Permanentmagnet dazu eingerichtet ist, ein Magnetfeld mit einer senkrecht zur Mittenebene stehenden Feldkomponente zu erzeugen,
wobei eine erste Spulenvorrichtung am ersten Messrohr des Messrohrpaars angeordnet ist, und wobei eine zweite Spulenvorrichtung an einem zweiten Messrohr des Messrohrpaars angeordnet ist, wobei die Spulenvorrichtungen dazu eingerichtet sind, den Schwingungsbewegungen des jeweiligen Messrohrs zu folgen,
wobei auf die jeweilige Mittenebene projizierte Querschnitte des Permanentmagnets sowie der Spulen überlappen, und wobei eine am ersten Messrohr angeordnete Spule insbesondere zwischen Permanentmagnet und einer an einem zweiten Messrohr des Messrohrpaars angeordnete Spule angeordnet ist.

In einer Ausgestaltung weist der Sensor eine zweite Magnetvorrichtung mit einem Permanentmagnet auf, wobei die zweite Magnetvorrichtung am zweiten Messrohr des Messrohrpaars angeordnet und dazu eingerichtet ist, den Schwingungsbewegungen des zweiten Messrohrs zu folgen, wobei der Permanentmagnet dazu eingerichtet ist, ein Magnetfeld senkrecht zur Mittenebene entgegengesetzt zum Magnetfeld der ersten Magnetvorrichtung zu erzeugen,
wobei auf die jeweilige Mittenebene projizierte Querschnitte des Permanentmagnets sowie der Spulen überlappen, und wobei die am zweiten Messrohr angeordnete Spule insbesondere zwischen dem Permanentmagnet der zweiten Magnetvorrichtung und der Spule der ersten Spulenvorrichtung angeordnet ist.

Das durch die beiden einzelnen Magnetfelder zusammengesetzte Magnetfeld ist somit im Bereich der Spulen stark inhomogen.

In einer Ausgestaltung ist eine erste Magnetvorrichtung an einem ersten Messrohr eines Messrohrpaars angeordnet und dazu eingerichtet, den Schwingungsbewegungen des ersten Messrohrs zu folgen, wobei der Permanentmagnet dazu eingerichtet ist, ein Magnetfeld mit einer parallel zur Mittenebene verlaufenden Feldkomponente zu erzeugen,
wobei eine erste Spulenvorrichtung am ersten Messrohr des Messrohrpaars angeordnet ist, und wobei eine zweite Spulenvorrichtung an einem zweiten Messrohr des Messrohrpaars angeordnet ist,
oder wobei eine erste Spulenvorrichtung und eine zweite Spulenvorrichtung an einem zweiten Messrohr des Messrohrpaars angeordnet sind,
wobei die Spulenvorrichtungen dazu eingerichtet sind, den Schwingungsbewegungen des jeweiligen Messrohrs zu folgen.

In einer Ausgestaltung ist eine zweite Magnetvorrichtung mit einem Permanentmagnet vorgesehen, wobei der Permanentmagnet der zweiten Magnetvorrichtung entgegengesetzt zum Permanentmagnet der ersten Magnetvorrichtung orientiert ist,
wobei in einer Projektion auf die Mittenebene die Spulen zwischen den Permanentmagneten angeordnet sind.

In einer Ausgestaltung ist die zweite Magnetvorrichtung am ersten Messrohr angeordnet und dazu eingerichtet, den Schwingungsbewegungen des ersten Messrohrs zu folgen, wobei die erste Spulenvorrichtung am zweiten Messrohr angeordnet ist,
oder wobei die zweite Magnetvorrichtung am zweien Messrohr angeordnet und dazu eingerichtet ist, den Schwingungsbewegungen des zweiten Messrohrs zu folgen, wobei die erste Spulenvorrichtung am ersten Messrohr angeordnet ist.

In einer Ausgestaltung weist der Sensor zwei Anschlussdrähte eingerichtet zur Verbindung mit einer elektronischen Mess-/Betriebsschaltung auf, welche jeweils mit einem Spulenende verbunden sind, wobei die Anschlussdrähte elektrisch isoliert sind und zusammengeführt werden, wobei die Anschlussdrähte nach Zusammenführen insbesondere verdrillt sind,
oder wobei die Anschlussdrähte zu einer Platine mit elektrisch leitfähigen Leiterbahnen geführt sind, welche Leiterbahnen zumindest in einem Kontaktbereich Anschlussdraht - Leiterbahn parallel geführt sind und einen Abstand zueinander aufweisen, welcher kleiner ist als zwei Leiterbahnbreiten.

In einer Ausgestaltung ist die Reihenschaltung der Spulen mittels eines elektrisch leitfähigen Verbindungsdrahts oder über eine Platine mit einer elektrisch leitfähigen Leiterbahn hergestellt, wobei die Spulen mit der Leiterbahn mittels elektrisch leitfähiger Verbindungsdrähte verbunden sind.

In einer Ausgestaltung ist eine Querschnittsfläche der Spulen kleiner als 1000 Quadratmillimeter, und insbesondere kleiner als 500 Quadratmillimeter und bevorzugt kleiner als 300 Quadratmillimeter,
und/oder wobei eine Querschnittsfläche der Permanentmagnete kleiner ist als 1000 Quadratmillimeter, und insbesondere kleiner als 500 Quadratmillimeter und bevorzugt kleiner als 300 Quadratmillimeter.

Ein erfindungsgemäßes Coriolismessgerät zum Messen eines Massedurchflusses oder einer Dichte eines durch Messrohre des Coriolis-Messaufnehmers strömenden Mediums umfasst:
einen erfindungsgemäßen Coriolis-Messaufnehmer;
eine elektronische Mess-/Betriebsschaltung eingerichtet zum Betreiben des mindestens einen Erregers und der Sensoren und zum Bereitstellen von Messwerten des Massedurchflusses oder der Dichte des Mediums;
ein Elektronikgehäuse zum Behausen der elektronischen Mess-/Betriebsschaltung.

Im Folgenden wird die Erfindung anhand von Ausführungsbeispielen beschrieben.
Fig. 1 beschreibt einen Aufbau eines beispielhaften Coriolis-Messgeräts mit einem beispielhaften Coriolis-Messaufnehmer;
und Figs. 2 a) und 2 b) beschreiben jeweils eine Anordnung eines erfindungsgemäßen beispielhaften Sensors an einem Messrohrpaar;
Figs. 3 a) bis c) skizzieren beispielhafte Anordnungen und Ausgestaltungen von Spulenvorrichtungen und Magnetvorrichtungen zueinander;
Fig. 4 a) und b) skizzieren weitere beispielhafte erfindungsgemäße Sensoranordnungen;
und Figs. 5 a) und b) skizzieren Orientierung und Verbindung von Spulen von Spulenanordnungen;
und Fig. 6 zeigt beispielhafte Anbindungen eines Sensors an eine Platine.

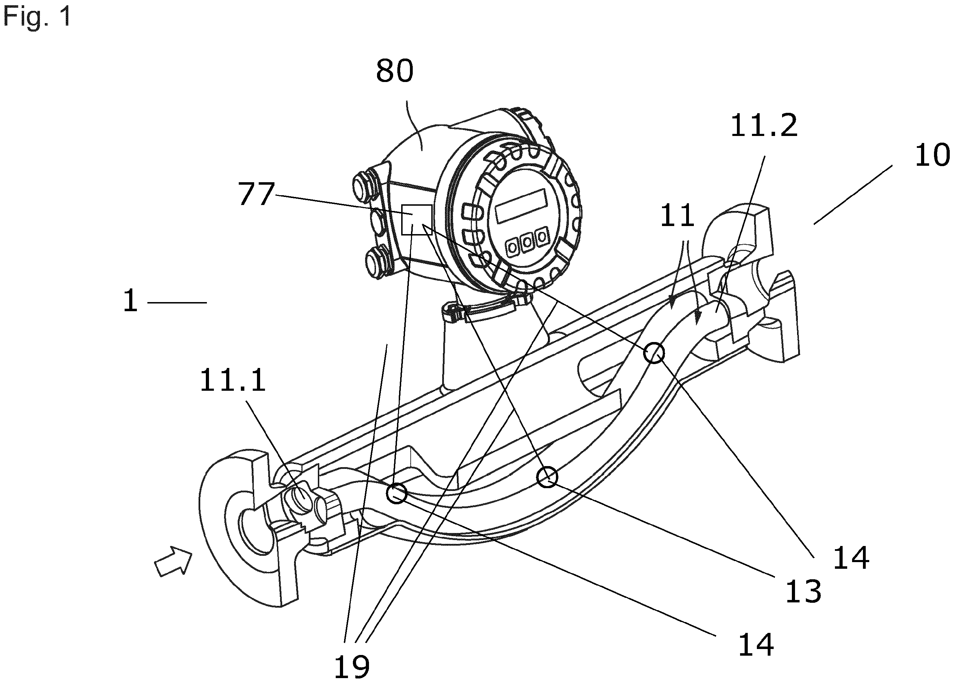

Fig. 1 skizziert den Aufbau eines beispielhaften Coriolis-Messgeräts 1 mit einem beispielhaften Coriolis-Messaufnehmer 10, wobei der Coriolis-Messaufnehmer zwei Messrohre 11 mit jeweils einem Einlauf 11.1 und einem Auslauf 11.2, einen Trägerkörper 12 zum Tragen der Messrohre, einen Erreger 13, und zwei Sensoren 15 aufweist. Der Erreger ist dazu eingerichtet, die beiden Messrohre senkrecht zu einer jeweils durch die bogenförmig ausgestalteten Messrohre definierten Messrohrlängsebene zum Schwingen anzuregen. Die Sensoren sind dazu eingerichtet, die den Messrohren aufgeprägte Schwingung zu erfassen.

Der Coriolis-Messaufnehmer ist mit einem Elektronikgehäuse 80 des Coriolis-Messgeräts verbunden, welches dazu eingerichtet ist, eine elektronische Mess-/Betriebsschaltung 77 zu behausen, welche Mess-/Betriebsschaltung dazu eingerichtet ist, den Erreger sowie die Sensoren zu betrieben und auf Basis von mittels der Sensoren gemessenen Schwingungseigenschaften des Messrohrs Durchflussmesswerte und/oder Dichtemesswerte zu ermitteln und bereitzustellen. Der Erreger sowie die Sensoren sind mittels elektrischer Verbindungen 19 mit der elektronischen Mess-/Betriebsschaltung verbunden. Die elektrischen Verbindungen 19 können jeweils durch Kabelführungen zusammengefasst sein.

Ein erfindungsgemäßes Coriolis-Messgerät ist nicht auf das Vorhandensein zweier Messrohre beschränkt. So kann die Erfindung beispielsweise auch bei einem Vierrohr-Messgerät umgesetzt werden.

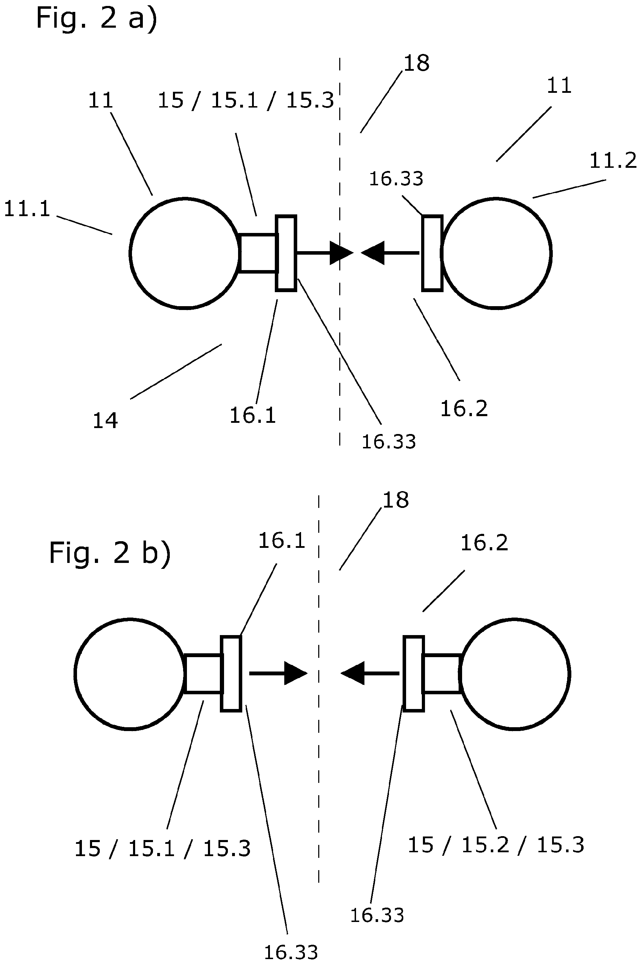

Fig. 2 a) zeigt eine beispielhafte schematische Anordnung eines erfindungsgemäßen Sensors mit einer ersten Magnetvorrichtung 15.1 mit einem Permanentmagnet 15.3 an einem ersten Messrohr 11.1 und einer ersten Spulenvorrichtung 16.1, welche am ersten Messrohr angeordnet ist und einer zweiten Spulenvorrichtung 16.2, welche an einem zweiten Messrohr 11.2 angeordnet ist. Die Messrohre sind dazu eingerichtet senkrecht zu einer Mittenebene 18 gegeneinander zu schwingen, so dass die erste Magnetvorrichtung in der zweiten Spulenvorrichtung eine elektrische Spannung in einer Spule 16.3 der zweiten Spulenvorrichtung induziert, welche Spannung Bestimmung von Durchflussmesswerten herangezogen werden kann. Die erste Spulenvorrichtung und die erste Magnetvorrichtung sind dabei relativ zueinander unbeweglich angeordnet, so dass keine Induktion einer elektrischen Spannung in der Spule der ersten Spulenvorrichtung durch die erste Magnetvorrichtung stattfindet. Auf die jeweilige Mittenebene 18 projizierte Querschnitte von Permanentmagnet der Magnetvorrichtung sowie der Spulen der Spulenvorrichtungen überlappen sich gegenseitig zumindest teilweise.

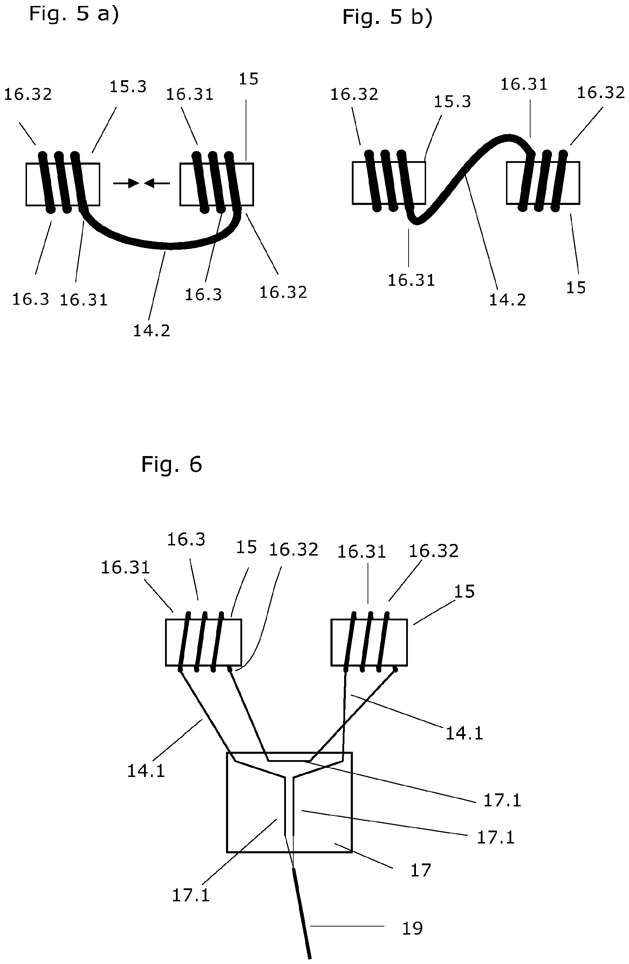

Ein externes Magnetfeld, beispielsweise durch technische oder medizinische Geräte hervorgerufen, ruft bei schwingenden Messrohren Wirbelströme in der Messrohrwandung hervor, welche in den Spulen der Spulenvorrichtungen eine Messspannung verfälschende, phasenverschobene Störspannungen induzieren. Erfindungsgemäß werden die Spule der ersten Spulenvorrichtung und die Spule der zweiten Magnetvorrichtung derart in Reihe geschaltet und mit jeweils einem Windungssinn ausgestattet, (siehe Figs. 5 a) und b)), dass sich die Störspannungen der Spulen gegenseitig aufheben, so dass in sehr guter Näherung die in der Spule der zweiten Spulenvorrichtung induzierte Messspannung verbleibt.

Fig. 2 b) zeigt eine weitere beispielhafte schematische Anordnung eines Sensors, wobei im Unterschied zur in Fig. 2 a) gezeigten Ausgestaltung des Sensors eine zweite Magnetvorrichtung 15.2 vorgesehen ist, welche am zweiten Messrohr angeordnet ist. Die zweite Spulenvorrichtung und die zweite Magnetvorrichtung sind dabei relativ zueinander unbeweglich angeordnet, so dass keine Induktion einer elektrischen Spannung in der Spule der zweiten Spulenvorrichtung durch die zweite Magnetvorrichtung stattfindet. Im Unterschied zur in Fig. 2 a) gezeigten Ausgestaltung findet bei Schwingen der Messrohre auch eine Induktion einer Messspannung in der Spule der ersten Spulenvorrichtung statt, da ein Permanentmagnet 15.3 der zweiten Magnetvorrichtung in der Spule der ersten Spulenvorrichtung 16.1.

Bei einer Reihenschaltung der Spule gemäß Figs. 5 a) oder b) heben sich Störspannungen auf und die in den Spulen induzierten Messsignale verstärken sich. Die Permanentmagnete sind dabei antiparallel zueinander orientiert, so dass die zwischen den Permanentmagneten angeordneten Spulen ein stark inhomogenes Magnetfeld erfahren.

Mittels des erfindungsgemäßen Sensors kann somit auf eine sehr einfache Weise der Einfluss von Störmagneten oder externen Magnetfeldern stark reduziert werden, ohne auf elektronische Korrekturmaßnahmen zurückgreifen zu müssen. Es hat sich gezeigt, dass ein Nullpunktfehler (berechneter Durchfluss bei Nulldurchfluss) des Coriolis-Messgeräts auf unter 10% des Nullpunktfehlers eines Coriolis-Messgeräts ohne erfindungsgemäßen Sensor reduziert werden kann.

Einander zugewandte Seiten der Spulen definieren jeweils eine erste Stirnfläche 16.33, wobei die ersten Stirnflächen einen Spulenabstand definieren, wobei ein Verhältnis Querschnittsfläche zu einem Quadrat des Spulenabstands größer ist als 10, und insbesondere größer ist als 30 und bevorzugt größer ist als 100. Dadurch ist eine räumliche Nähe der Spulen gegeben, so dass sie bei erfindungsgemäßer Verschaltung in sehr guter Näherung ausschließlich lokale, inhomogene Magnetfelder erfassen können.

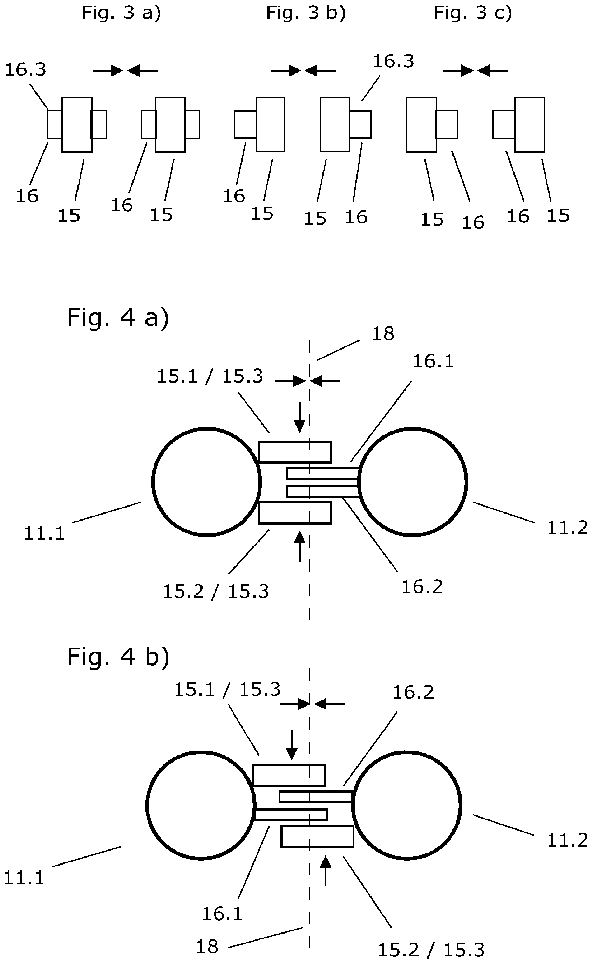

Figs. 3 a) bis 3 c) skizzieren verschiedene beispielhafte Ausgestaltungen von Spulenvorrichtungen und Magnetvorrichtungen eines Sensors mit zwei Magnetvorrichtungen wie in Fig. 2 a) und Fig. 2 b) gezeigt, wobei die Pfeile eine Bewegungsrichtung von Messrohren andeuten.

Bei Fig. 3 a) skizziert einen Sensor, bei welchem jeweils ein Permanentmagnet im Inneren einer zugehörigen Spule angeordnet ist. Die Spule kann dabei eine Wickelspule sein. Die Spule kann aber auch eine gesinterte Spule, insbesondere eine LTCC-Spule sein. Ein Zentralbereich kann dabei frei von Windungen und/oder Sintermaterial sein.

Figs. 3 b) und c) skizzieren Sensoren, bei welchen Spule und zugehöriger Permanentmagnet hintereinander angeordnet sind. Vorteilhafterweise sind die Permanentmagnete wie in Fig. 3 b) gezeigt entgegengesetzt zur in Fig. 3 c) gezeigten Variante auf jeweils einer Rückseite einer Spulenvorrichtung angeordnet, so dass eine magnetische Abstoßung zwischen den Permanentmagneten verringert ist.

Fig. 4 a) zeigt eine weitere beispielhafte Anordnung eines erfindungsgemäßen Sensors wobei eine erste Magnetvorrichtung 15.1 und eine zweite Magnetvorrichtung 15.2 an einem ersten Messrohr 11.1 und eine erste Spulenvorrichtung 16.1 und eine zweite Spulenvorrichtung 16.2 an einem zweiten Messrohr 11.2 befestigt sind, wobei die Projektionen der Spulen zwischen den Projektionen der Permanentmagnete angeordnet sind. Wie in Figs. 2 a) und b) gezeigt, sind die Messrohre dazu eingerichtet, senkrecht bezüglich der Mittenebene 18 zu schwingen, wie durch die horizontalen Pfeile angedeutet. Im Unterschied zur in Figs. 2 a) und b) gezeigten Ausgestaltung sind die Permanentmagnete dazu eingerichtet, Magnetfelder parallel zur Mittenebene und entgegengesetzt zueinander zu erzeugen, wobei die Spulen bzw. Spulenvorrichtungen bei Schwingen der Messrohre in senkrecht zum durch beide Permanentmagnete erzeugten Magnetfeld bewegt werden.

Fig. 4 b) zeigt eine weitere beispielhafte Anordnung eines erfindungsgemäßen Sensors wobei im Unterschied zur in Fig. 4 a) gezeigten Variante jeweils eine Spulenvorrichtung und eine Magnetvorrichtung an jeweils einem Messrohr angeordnet ist.

Die in Figs. 2 a) bis 4 b) gezeigten Spulenvorrichtungen weisen jeweils eine konvexe Einhüllende auf, wobei idealerweise ein Abstand der konvexen Einhüllenden entlang von Spulenlängsachsen in Ruhestellung der Messrohre kleiner ist als 3 Millimeter, und insbesondere kleiner als 2 Millimeter und bevorzugt kleiner ist als 1.5 Millimeter. So können in den Spulen Messspannungen besser und wirksamer induziert werden.

Die Befestigung der Spulenvorrichtungen sowie der Magnetvorrichtungen an den jeweiligen Messrohren kann dabei direkt oder beispielsweise über eine Halterung (nicht gezeigt) erfolgen. Für den Fachmann ist es eine Standardaufgabe, eine Befestigungsweise auszuwählen.

Um eine Masse des Sensors zu minimieren, damit er auf die Messrohrschwingungen einen nur vernachlässigbaren Einfluss hat, ist eine Querschnittsfläche der Spulen kleiner ist als 1000 Quadratmillimeter, und insbesondere kleiner als 500 Quadratmillimeter und bevorzugt kleiner als 300 Quadratmillimeter, und/oder eine Querschnittsfläche der Permanentmagnete ist kleiner als 1000 Quadratmillimeter, und insbesondere kleiner als 500 Quadratmillimeter und bevorzugt kleiner als 300 Quadratmillimeter.

Entsprechend der in Figs. 2 a) und b) gezeigten Ausgestaltungen können bei den in Figs. 4 a) und b) gezeigten Ausgestaltungen auch jeweils nur eine Magnetvorrichtung angeordnet sein.

Figs. 5 a) und 5 b) skizzieren jeweils eine erfindungsgemäße Reihenschaltung der Spulen zueinander anhand von beispielhaften Spulen und Permanentmagneten.

Das aufgrund von Messrohrschwingungen veränderliche Magnetfeld eines Permanentmagnets 15.3 der ersten/zweiten Magnetvorrichtung im Bezugssystem einer Spule der zweiten/ersten Spulenvorrichtung induziert in der Spule eine elektrische Spannung gemäß dem Faraday'schen Induktionsgesetz, wobei Elektronen eine Kraft senkrecht zu einer Ausrichtung des Magnetfelds erfahren. Da das Magnetfeld der ersten Magnetvorrichtung zwischen den Magnetvorrichtungen entgegengesetzt zum Magnetfeld der zweiten Magnetvorrichtung ist, ist die Kraft auf Elektronen in der Spule der ersten Spulenvorrichtung entgegengesetzt zur Kraft auf Elektronen in der Spule der zweiten Spulenvorrichtung. Um eine Messspannungsaddition der in den Spulen erzeugten Messspannungen zu erhalten, müssen bei an verschiedenen Messrohren angeordneten Spulen entweder Windungssinne der Spulen entgegengesetzt sein und die Spulen über beide inneren Spulenenden 16.31 (siehe Fig. 5 b)) oder über beide äußeren Enden elektrisch verbunden sein, oder Windungssinne müssen gleich sein und die Spulen über ein inneres Ende und ein äußeres Ende elektrisch verbunden (Fig. 5 a).

Der Kern der Erfindung ist also, dass magnetische Störfelder, welche größtenteils in einiger Entfernung zum Sensor entstehen in sehr guter Näherung bei beiden Spulensystemen eines Sensors einen gleichen Feldgradienten aufweisen und somit durch die beanspruchte Verschaltung der Spulen in ihrer induktiven Wirkung destruktiv interferieren.

Die Kompensation der Störspannungen funktioniert bei einem Sensor mit zwei Spulenvorrichtungen und einer Magnetvorrichtung auf gleiche Weise.

Die Spulen können dabei wie in Figs. 5 a) und 5 b) gezeigt mittels eines elektrisch leitfähigen Verbindungsdrahts 14.2 verbunden sein.

Fig. 6 skizziert einen beispielhaften Anschluss des Sensors an eine Platine 17, wobei Anschlussdrähte 14.1 zum Anschließen der Spulen an eine elektronische Mess-/Betriebsschaltung zu jeweils einer elektrisch leitfähigen Leiterbahn 17.1 der Platine geführt. Die Leiterbahnen werden zusammengeführt und verlaufen dann parallel zueinander. So kann eine magnetische Schleife verkleinert werden. Die Reihenschaltung der Spulen kann dabei wie hier gezeigt anders als in Figs. 5 a) und 5 b) gezeigt über eine elektrisch leitfähige Leiterbahn 17.1 sichergestellt sein. Mittels einer elektrischen Verbindung 19 können die Messspannungen dann zur elektronischen Mess-/Betriebsschaltung geführt werden.

Alternativ zur Platine können die Anschlussdrähte auch verdrillt werden, um eine magnetische Schleife zu verkleinern.

### Bezugszeichenliste

- 1: Coriolis-Messgerät
- 10: Coriolis-Messaufnehmer
- 11: Messrohr
- 11.1: erstes Messrohr
- 11.2: zweites Messrohr
- 12: Trägerkörper
- 13: Erreger
- 14: Sensor
- 14.1: Anschlussdrähte
- 14.2: Verbindungsdraht
- 15: Magnetvorrichtung
- 15.1: erste Magnetvorrichtung
- 15.2: zweite Magnetvorrichtung
- 15.3: Permanentmagnet
- 15.31: zweite Stirnfläche
- 16: Spulenvorrichtung
- 16.1: erste Spulenvorrichtung
- 16.2: zweite Spulenvorrichtung
- 16.3: Spule
- 16.31: inneres Spulendende
- 16.32: äußeres Spulenende
- 16.33: erste Stirnfläche
- 17: Platine
- 17.1: elektrisch leitfähige Leiterbahn
- 18: Mittenebene
- 19: elektrische Verbindung
- 77: elektronische Mess-/Betriebsschaltung
- 80: Elektronikgehäuse

## Patentansprüche

1. Coriolis-Messaufnehmer (10) für ein Coriolis-Messgerät (1) zum Messen eines Massedurchflusses oder einer Dichte eines durch Messrohre des Coriolis-Messaufnehmers strömenden Mediums umfassend:
mindestens ein Paar Messrohre (11) zum Führen eines Mediums;
einen Trägerkörper (12) zum Tragen der Messrohre;
mindestens einen Erreger (13) eingerichtet zum Anregen von Messrohrschwingungen,
pro Messrohrpaar mindestens zwei Sensoren (14) eingerichtet zum Erfassen von Messrohrschwingungen,
wobei die Messrohre eines jeweiligen Messrohrpaars in Ruhestellung symmetrisch bezüglich einer jeweiligen Mittenebene (18) sind, wobei die Messrohre jedes Messrohrpaars dazu eingerichtet sind, Schwingungen senkrecht zur jeweiligen Mittenebene auszuführen und entgegengesetzt zu schwingen,
wobei
jeder Sensor zumindest eine Magnetvorrichtung (15) mit jeweils einem Permanentmagnet (15.3) sowie zwei Spulenvorrichtungen (16) mit jeweils einer Spule (16.3) aufweist,
wobei mindestens eine Magnetvorrichtung dazu eingerichtet ist, durch Messrohrschwingungen relativ zu mindestens einer Spulenvorrichtung bewegt zu werden,
wobei Querschnittsflächen der Spulen parallel und insbesondere gleich zueinander sind und in einer Projektion aufeinander einen Überlapp von mindestens 90% bezüglich ihrer Flächenmaße aufweisen,
wobei die Spulen jeweils ein inneres, der jeweils anderen Spule zugewandtes Ende (16.31) und
ein äußeres, der jeweils anderen Spule abgewandtes Ende (16.32) aufweisen, und wobei die Spulen jeweils einen Windungssinn aufweisen,
wobei einem gegenläufigen Windungssinn der beiden Spulen ein negativer Windungskoeffizient zugeordnet ist, und wobei einem gleichläufigen Windungssinn der beiden Spulen ein positiver Windungskoeffizient zugeordnet ist, wobei das Vorzeichen des Windungskoeffizienten ein erstes Vorzeichen ist,
wobei die Spulen über ihre Enden miteinander in Reihe geschaltet sind, wobei einer Verschaltung der Spulen über beide inneren Enden oder über beide äußeren Enden ein positiver Schaltungskoeffizient zugeordnet ist, wobei einer Verschaltung der Spulen über ein inneres Ende und ein äußeres Ende ein negativer Schaltungskoeffizient zugeordnet ist, wobei das Vorzeichen des Schaltungskoeffizienten ein zweites Vorzeichen ist,
wobei der mindestens eine Permanentmagnet (15.3) dazu eingerichtet ist, im Bereich der Spulen ein inhomogenes Magnetfeld mit einer senkrecht zu den Querschnittsflächen der Spulen stehenden Feldkomponente zu erzeugen,
**dadurch gekennzeichnet, dass**
einander zugewandte Seiten der Spulen jeweils eine erste Stirnfläche (16.33) definieren, wobei die ersten Stirnflächen einen Spulenabstand definieren, wobei ein Verhältnis Querschnittsfläche zu einem Quadrat des Spulenabstands größer ist als 10, und insbesondere größer ist als 30 und bevorzugt größer ist als 100,
wobei ein Produkt aus dem erstem Vorzeichen und dem zweitem Vorzeichen negativ ist.

2. Coriolis-Messaufnehmer nach Anspruch 1,
wobei der mindestens eine Permanentmagnet (15.3) eine zu den Spulensystemen gerichtete zweite Stirnfläche (15.31) aufweist, welche parallel zu den Querschnittsflächen der Spulen verläuft, wobei eine Größe der zweiten Stirnfläche um höchstens 50% von einer Größe der ersten Stirnfläche abweicht.

3. Coriolis-Messaufnehmer nach Anspruch 2,
wobei die zweite Stirnfläche (15.31) einen Maximalabstand zu einer durch die ersten Stirnflächen definierten Spulenmittenebene aufweist,
wobei der Maximalabstand kleiner ist als 7 Spulenabstände und insbesondere kleiner als 5 Spulenabstände und bevorzugt kleiner als 3 Spulenabstände,
und/oder
wobei der Maximalabstand kleiner ist als 7 mm und insbesondere kleiner als 5 mm und bevorzugt kleiner als 3.5 mm.

4. Coriolis-Messaufnehmer nach einem der vorigen Ansprüche,
wobei
entweder die Windungssinne gegenläufig sind, und die Spulen (16.3) über beide inneren Enden oder über beide äußeren Enden elektrisch verbunden sind,
oder
wobei die Windungssinne gleichläufig sind und die Spulen über ein inneres Ende und ein äußeres Ende elektrisch verbunden sind.

5. Coriolis-Messaufnehmer nach einem der vorigen Ansprüche,
wobei eine erste Magnetvorrichtung (15.1) an einem ersten Messrohr (11.1) eines Messrohrpaars angeordnet und dazu eingerichtet ist, den Schwingungsbewegungen des ersten Messrohrs zu folgen, wobei der Permanentmagnet dazu eingerichtet ist, ein Magnetfeld mit einer senkrecht zur Mittenebene stehenden Feldkomponente zu erzeugen,
wobei eine erste Spulenvorrichtung (16.1) am ersten Messrohr des Messrohrpaars angeordnet ist, und wobei eine zweite Spulenvorrichtung (16.2) an einem zweiten Messrohr (11.2) des Messrohrpaars angeordnet ist, wobei die Spulenvorrichtungen dazu eingerichtet sind, den Schwingungsbewegungen des jeweiligen Messrohrs zu folgen,
wobei auf die jeweilige Mittenebene projizierte Querschnitte des Permanentmagnets sowie der Spulen überlappen, und wobei eine am ersten Messrohr angeordnete Spule insbesondere zwischen Permanentmagnet und einer an einem zweiten Messrohr des Messrohrpaars angeordnete Spule angeordnet ist.

6. Coriolis-Messaufnehmer nach Anspruch 5,
wobei der Sensor eine zweite Magnetvorrichtung (15.2) mit einem Permanentmagnet aufweist, wobei die zweite Magnetvorrichtung am zweiten Messrohr (11.2) des Messrohrpaars angeordnet und dazu eingerichtet ist, den Schwingungsbewegungen des zweiten Messrohrs zu folgen, wobei der Permanentmagnet dazu eingerichtet ist, ein Magnetfeld senkrecht zur Mittenebene entgegengesetzt zum Magnetfeld der ersten Magnetvorrichtung zu erzeugen,
wobei auf die jeweilige Mittenebene projizierte Querschnitte des Permanentmagnets sowie der Spulen überlappen, und wobei die am zweiten Messrohr angeordnete Spule insbesondere zwischen dem Permanentmagnet der zweiten Magnetvorrichtung und der Spule der ersten Spulenvorrichtung angeordnet ist.

7. Coriolis-Messaufnehmer nach einem der Ansprüche 1 bis 3,
wobei eine erste Magnetvorrichtung (15.1) an einem ersten Messrohr (11.1) eines Messrohrpaars angeordnet und dazu eingerichtet ist, den Schwingungsbewegungen des ersten Messrohrs zu folgen, wobei der Permanentmagnet dazu eingerichtet ist, ein Magnetfeld mit einer parallel zur Mittenebene verlaufenden Feldkomponente zu erzeugen,
wobei eine erste Spulenvorrichtung (16.1) am ersten Messrohr des Messrohrpaars angeordnet ist, und wobei eine zweite Spulenvorrichtung (16.2) an einem zweiten Messrohr (11.2) des Messrohrpaars angeordnet ist,
oder wobei eine erste Spulenvorrichtung (16.1) und eine zweite Spulenvorrichtung an einem zweiten Messrohr (11.2) des Messrohrpaars angeordnet sind,
wobei die Spulenvorrichtungen dazu eingerichtet sind, den Schwingungsbewegungen des jeweiligen Messrohrs zu folgen.

8. Coriolis-Messaufnehmer nach Anspruch 7,
wobei eine zweite Magnetvorrichtung (15.2) mit einem Permanentmagnet vorgesehen ist, wobei der Permanentmagnet der zweiten Magnetvorrichtung entgegengesetzt zum Permanentmagnet der ersten Magnetvorrichtung orientiert ist,
wobei in einer Projektion auf die Mittenebene die Spulen zwischen den Permanentmagneten angeordnet sind.

9. Coriolis-Messaufnehmer nach Anspruch 8,
wobei die zweite Magnetvorrichtung am ersten Messrohr angeordnet und dazu eingerichtet ist, den Schwingungsbewegungen des ersten Messrohrs zu folgen, wobei die erste Spulenvorrichtung am zweiten Messrohr angeordnet ist,
oder wobei die zweite Magnetvorrichtung am zweiten Messrohr angeordnet und dazu eingerichtet ist, den Schwingungsbewegungen des zweiten Messrohrs zu folgen, wobei die erste Spulenvorrichtung am ersten Messrohr angeordnet ist.

10. Coriolis-Messaufnehmer nach einem der vorigen Ansprüche,
wobei der Sensor (14) zwei Anschlussdrähte (14.1) eingerichtet zur Verbindung mit einer elektronischen Mess-/Betriebsschaltung aufweist, welche jeweils mit einem Spulenende verbunden sind, wobei die Anschlussdrähte elektrisch isoliert sind und zusammengeführt werden, wobei die Anschlussdrähte nach Zusammenführen insbesondere verdrillt sind,
oder wobei die Anschlussdrähte zu einer Platine (17) mit elektrisch leitfähigen Leiterbahnen (17.1) geführt sind, welche Leiterbahnen zumindest in einem Kontaktbereich Anschlussdraht-Leiterbahn parallel geführt sind und einen Abstand zueinander aufweisen, welcher kleiner ist als zwei Leiterbahnbreiten.

11. Coriolis-Messaufnehmer nach einem der vorigen Ansprüche,
wobei die Reihenschaltung der Spulen mittels eines elektrisch leitfähigen Verbindungsdrahts (14.2) oder über eine Platine (17) mit einer elektrisch leitfähigen Leiterbahn (17.1) hergestellt ist, wobei die Spulen mit der Leiterbahn mittels elektrisch leitfähiger Verbindungsdrähte verbunden sind.

12. Coriolis-Messaufnehmer nach einem der vorigen Ansprüche,
wobei eine Querschnittsfläche der Spulen kleiner ist als 1000 Quadratmillimeter, und insbesondere kleiner als 500 Quadratmillimeter und bevorzugt kleiner als 300 Quadratmillimeter,
und/oder wobei eine Querschnittsfläche der Permanentmagnete kleiner ist als 1000 Quadratmillimeter, und insbesondere kleiner als 500 Quadratmillimeter und bevorzugt kleiner als 300 Quadratmillimeter.

13. Coriolismessgerät (1) zum Messen eines Massedurchflusses oder einer Dichte eines durch Messrohre des Coriolis-Messaufnehmers strömenden Mediums umfassend:
einen Coriolis-Messaufnehmer (10) nach einem der vorigen Ansprüche;
eine elektronische Mess-/Betriebsschaltung (77) eingerichtet zum Betreiben des mindestens einen Erregers und der Sensoren und zum Bereitstellen von Messwerten des Massedurchflusses oder der Dichte des Mediums;
ein Elektronikgehäuse (80) zum Behausen der elektronischen Mess-/Betriebsschaltung.

## Claims

1. A Coriolis measuring transducer (10) for a Coriolis measuring device (1) for measuring a mass flow or a density of a medium flowing through measuring tubes of the Coriolis measuring transducer, comprising:
At least one pair of measuring tubes (11) for guiding a medium; A support body (12) for supporting the measuring tubes;
At least one exciter (13) configured to cause measuring tube vibrations, and at least two sensors (14) for each pair of measuring tubes configured to register measuring tube vibrations,
wherein in the rest position the measuring tubes of each pair of measuring tubes are symmetrical relative to a respective center plane (18), wherein the measuring tubes of each pair of measuring tubes are configured to cause vibrations perpendicular to the respective center plane and to vibrate in opposite directions,
wherein each sensor has at least one magnetic device (15) with a permanent magnet (15.3) and two coil devices (16) each with one coil (16.3),
wherein at least one magnetic device is configured to be moved relative to at least one coil device by measuring tube vibrations,
wherein cross-sectional areas of the coils are parallel to each other and are in particular identical to each other and have an overlap of at least 90% of their surface dimensions in a projection on top of each other,
wherein the coils each have an internal end (16.31) facing toward the other coil and an external end (16.32) facing away from the other coil, and wherein the coils each have a winding direction,
wherein a negative winding coefficient is assigned to an opposite winding direction of the two coils, and wherein a positive winding coefficient is assigned to an identical winding direction of the two coils, wherein the sign of the winding coefficient is a first sign,
wherein the coils are connected in series via their ends, wherein a connection of the coils via both internal ends or via both external ends is assigned a positive connection coefficient, wherein a connection of the coils via one internal end and one external end is assigned a negative connection coefficient, wherein the sign of the connection coefficient is a second sign,
wherein the at least one permanent magnet (15.3) is configured to generate an inhomogeneous magnetic field in the area of the coils with a field component positioned perpendicular to the cross-sectional areas of the coils,
**characterized in that**
sides of the coils facing toward each other each define a first end face (16.33), wherein the first end faces define a coil spacing, wherein a ratio between the cross-sectional area and a square of the coil spacing is greater than 10 and in particular greater than 30, and preferably greater than 100,
wherein a product of the first sign and the second sign is negative.

2. The Coriolis measuring transducer as claimed in claim 1,
wherein the at least one permanent magnet (15.3) has a second end face (15.31) which faces toward the coil systems and runs parallel to the cross-sectional areas of the coils, wherein a size of the second end face differs from a size of the first end face by no more than 50%.

3. The Coriolis measuring transducer as claimed in claim 2,
wherein the second end face (15.31) has a maximum distance from a coil center plane defined by the first end faces,
wherein the maximum distance is less than 7 coil spacings and in particular less than 5 coil spacings, and preferably less than 3 coil spacings,
and/or
wherein the maximum distance is less than 7 mm and in particular less than 5 mm, and preferably less than 3.5 mm.

4. The Coriolis measuring transducer as claimed in one of the preceding claims,
wherein
either the winding direction is opposite, and the coils (16.3) are electrically connected via both internal ends or via both external ends,
or
wherein the winding direction is identical, and the coils are electrically connected via one internal end and one external end.

5. The Coriolis measuring transducer as claimed in one of the preceding claims,
wherein a first magnetic device (15.1) is arranged on a first measuring tube (11.1) of a pair of measuring tubes and is configured to follow the vibrating movements of the first measuring tube, wherein the permanent magnet is configured to generate a magnetic field with a field component positioned perpendicular to the center plane,
wherein a first coil device (16.1) is arranged on the first measuring tube of the pair of measuring tubes, and wherein a second coil device (16.2) is arranged on a second measuring tube (11.2) of the pair of measuring tubes, wherein the coil devices are configured to follow the vibrating movements of the respective measuring tube,
wherein cross sections of the permanent magnet and coils projected onto the respective center plane overlap, and wherein a coil arranged on the first measuring tube is in particular arranged between the permanent magnet and a coil arranged on a second measuring tube of the pair of measuring tubes.

6. The Coriolis measuring transducer as claimed in claim 5,
wherein the sensor has a second magnetic device (15.2) with a permanent magnet, wherein the second magnetic device is arranged on the second measuring tube (11.2) of the pair of measuring tubes and is configured to follow the vibrating movements of the second measuring tube, wherein the permanent magnet is configured to generate a magnetic field perpendicular to the center plane in an opposite direction to the magnetic field of the first magnetic device,
wherein cross sections of the permanent magnet and coils projected onto the respective center plane overlap, and wherein a coil arranged on the second measuring tube is in particular arranged between the permanent magnet of the second magnetic device and the coil of the first coil device.

7. The Coriolis measuring transducer as claimed in one of claims 1 to 3,
wherein a first magnetic device (15.1) is arranged on a first measuring tube (11.1) of a pair of measuring tubes and is configured to follow the vibrating movements of the first measuring tube, wherein the permanent magnet is configured to generate a magnetic field with a field component running parallel to the center plane,
wherein a first coil device (16.1) is arranged on the first measuring tube of the pair of measuring tubes, and wherein a second coil device (16.2) is arranged on a second measuring tube (11.2) of the pair of measuring tubes,
or wherein a first coil device (16.1) and a second coil device are arranged on a second measuring tube (11.2) of the pair of measuring tubes,
wherein the coil devices are configured to follow the vibrating movements of the respective measuring tube.

8. The Coriolis measuring transducer as claimed in claim 7,
wherein a second magnetic device (15.2) is equipped with a permanent magnet, wherein the permanent magnet of the second magnetic device is oriented opposite to the permanent magnet of the first magnetic device,
wherein the coils are arranged between the permanent magnets in a projection onto the center plane.

9. The Coriolis measuring transducer as claimed in claim 8,
wherein the second magnetic device is arranged on the first measuring tube and is configured to follow the vibrating movements of the first measuring tube, wherein the first coil device is arranged on the second measuring tube,
or wherein the second magnetic device is arranged on the second measuring tube and is configured to follow the vibrating movements of the second measuring tube, wherein the first coil device is arranged on the first measuring tube.

10. The Coriolis measuring transducer as claimed in one of the preceding claims,
wherein the sensor (14) has two connecting wires (14.1) configured for connection to an electronic measuring/operating circuit, said connecting wires each being connected to a coil end, wherein the connecting wires are electrically insulated and combined, wherein the connecting wires are in particular intertwined after being combined,
or wherein the connecting wires are guided to a PCB (17) with electrically conductive traces (17.1), said traces being guided in parallel at least in a contact area between the connecting wire and trace, and being spaced less than two trace widths apart.

11. The Coriolis measuring transducer as claimed in one of the preceding claims,
wherein the series connection of the coils is produced by means of an electrically conductive connecting wire (14.2) or via a PCB (17) with an electrically conductive trace (17.1), wherein the coils are connected to the trace by means of electrically conductive connecting wires.

12. The Coriolis measuring transducer as claimed in one of the preceding claims,
wherein a cross-sectional area of the coils is smaller than 1000 square millimeters and in particular smaller than 500 square millimeters, and preferably smaller than 300 square millimeters,
and/or wherein a cross-sectional area of the permanent magnets is smaller than 1000 square millimeters and in particular smaller than 500 square millimeters, and preferably smaller than 300 square millimeters.

13. A Coriolis measuring device (1) for measuring a mass flow or a density of a medium flowing through measuring tubes of the Coriolis measuring transducer, comprising:
A Coriolis measuring transducer (10) as claimed in one of the preceding claims;
An electronic measuring/operating circuit (77) configured to operate the at least one exciter and the sensors, and to provide measured values relating to the mass flow or density of the medium;
An electronics enclosure (80) to house the electronic measuring/operating circuit.

## Revendications

1. Débitmètre Coriolis (10) pour un appareil de mesure à effet Coriolis (1) destiné à la mesure d'un débit massique ou d'une densité d'un produit s'écoulant à travers des tubes de mesure du débitmètre Coriolis, lequel débitmètre comprend :
au moins une paire de tubes de mesure (11) destiné à guider un produit ;
un corps de support (12) destiné à supporter les tubes de mesure ;
au moins un excitateur (13) conçu pour générer des vibrations de tube de mesure,
au moins deux capteurs (14) par paire de tubes de mesure conçus destinés à détecter des vibrations de tube de mesure,
les tubes de mesure d'une paire respective de tubes de mesure étant symétriques par rapport à un plan médian respectif (18) en position de repos, les tubes de mesure de chaque paire de tubes de mesure étant conçus pour exécuter des vibrations perpendiculaires au plan médian respectif et pour vibrer en sens inverse,
chaque capteur comprenant au moins un dispositif magnétique (15) avec respectivement un aimant permanent (15.3) ainsi que deux dispositifs à bobine (16) avec chacun une bobine (16.3),
au moins un dispositif magnétique étant conçu pour être déplacé par des vibrations de tube de mesure par rapport à au moins un dispositif à bobine,
des surfaces de section transversale des bobines étant parallèles et notamment égales entre elles et présentant, en projection l'une sur l'autre, un chevauchement d'au moins 90 % par rapport à leurs dimensions de surface,
les bobines présentant chacune une extrémité intérieure (16.31) tournée vers l'autre bobine respective et une extrémité extérieure (16.32) opposée à l'autre bobine respective, et les bobines présentant chacune un sens d'enroulement,
un coefficient d'enroulement négatif étant associé à un sens d'enroulement opposé des deux bobines, et un coefficient d'enroulement positif étant associé à un sens d'enroulement identique des deux bobines, le signe du coefficient d'enroulement étant un premier signe,
les bobines étant couplées en série entre elles par leurs extrémités, un coefficient de couplage positif étant associé à un câblage des bobines par les deux extrémités intérieures ou par les deux extrémités extérieures, un coefficient de couplage négatif étant associé à un câblage des bobines par une extrémité intérieure et une extrémité extérieure, le signe du coefficient de couplage étant un deuxième signe,
l'au moins un aimant permanent (15.3) étant conçu pour générer dans la zone des bobines un champ magnétique inhomogène avec une composante de champ perpendiculaire aux surfaces de section transversale des bobines,
**caractérisé en ce que**
des côtés des bobines se faisant face définissent chacun une première surface frontale (16.33), les premières surfaces frontales définissant une distance entre les bobines, un rapport entre la surface de la section transversale et un carré de la distance entre les bobines étant supérieur à 10, et notamment supérieur à 30 et de préférence supérieur à 100,
un produit du premier signe et du deuxième signe étant négatif.

2. Débitmètre Coriolis selon la revendication 1,
pour lequel l'au moins un aimant permanent (15.3) présente une deuxième surface frontale (15.31) orientée vers les systèmes de bobines, laquelle surface s'étend parallèlement aux surfaces de section transversale des bobines, une taille de la deuxième surface frontale s'écartant d'au plus 50 % d'une taille de la première surface frontale.

3. Débitmètre Coriolis selon la revendication 2,
pour lequel la deuxième surface frontale (15.31) présente une distance maximale par rapport à un plan médian de la bobine défini par les premières surfaces frontales,
la distance maximale étant inférieure à 7 distances entre les bobines et notamment inférieure à 5 distances entre les bobines et de préférence inférieure à 3 distances entre les bobines,
et/ou
la distance maximale étant inférieure à 7 mm et notamment inférieure à 5 mm et de préférence inférieure à 3,5 mm.

4. Débitmètre Coriolis selon l'une des revendications précédentes,
pour lequel
soit les sens des enroulements sont opposés, et les bobines (16.3) sont reliées électriquement par les deux extrémités intérieures ou par les deux extrémités extérieures,
soit les sens des enroulements sont identiques et les bobines sont reliées électriquement par une extrémité intérieure et une extrémité extérieure.

5. Débitmètre Coriolis selon l'une des revendications précédentes,
pour lequel un premier dispositif magnétique (15.1) est disposé sur un premier tube de mesure (11.1) d'une paire de tubes de mesure et est conçu pour suivre les mouvements de vibration du premier tube de mesure, l'aimant permanent étant conçu pour générer un champ magnétique avec une composante de champ perpendiculaire au plan médian,
pour lequel un premier dispositif à bobine (16.1) est disposé sur le premier tube de mesure de la paire de tubes de mesure, et un deuxième dispositif à bobine (16.2) est disposé sur un deuxième tube de mesure (1 1.2) de la paire de tubes de mesure, les dispositifs à bobine étant conçus pour suivre les mouvements de vibration du tube de mesure respectif,
pour lequel les sections transversales de l'aimant permanent ainsi que des bobines projetées sur le plan médian respectif se chevauchent, et
pour lequel une bobine disposée sur le premier tube de mesure est disposée notamment entre l'aimant permanent et une bobine disposée sur un deuxième tube de mesure de la paire de tubes de mesure.

6. Débitmètre Coriolis selon la revendication 5,
pour lequel le capteur comprend un deuxième dispositif magnétique (15.2) avec un aimant permanent, le deuxième dispositif magnétique étant disposé sur le deuxième tube de mesure (11.2) de la paire de tubes de mesure et étant conçu pour suivre les mouvements de vibration du deuxième tube de mesure, l'aimant permanent étant conçu pour générer un champ magnétique perpendiculaire au plan médian opposé au champ magnétique du premier dispositif magnétique,
pour lequel les sections transversales de l'aimant permanent ainsi que des bobines projetées sur le plan médian respectif se chevauchent, et
pour lequel la bobine disposée sur le deuxième tube de mesure est disposée notamment entre l'aimant permanent du deuxième dispositif magnétique et la bobine du premier dispositif à bobine.

7. Débitmètre Coriolis selon l'une des revendications 1 à 3,
pour lequel un premier dispositif magnétique (15.1) est disposé sur un premier tube de mesure (11.1) d'une paire de tubes de mesure et est conçu pour suivre les mouvements de vibration du premier tube de mesure, l'aimant permanent étant conçu pour générer un champ magnétique avec une composante de champ s'étendant parallèlement au plan médian,
pour lequel un premier dispositif à bobine (16.1) est disposé sur le premier tube de mesure de la paire de tubes de mesure, et
pour lequel un deuxième dispositif à bobine (16.2) est disposé sur un deuxième tube de mesure (11.2) de la paire de tubes de mesure,
ou pour lequel un premier dispositif à bobine (16.1) et un deuxième dispositif à bobine sont disposés sur un deuxième tube de mesure (11.2) de la paire de tubes de mesure,
les dispositifs à bobine étant conçus pour suivre les mouvements de vibration du tube de mesure respectif.

8. Débitmètre Coriolis selon la revendication 7,
pour lequel il est prévu un deuxième dispositif magnétique (15.2) avec un aimant permanent, l'aimant permanent du deuxième dispositif magnétique étant orienté à l'opposé de l'aimant permanent du premier dispositif magnétique,
pour lequel, dans une projection sur le plan médian, les bobines sont disposées entre les aimants permanents.

9. Débitmètre Coriolis selon la revendication 8,
pour lequel le deuxième dispositif magnétique est disposé sur le premier tube de mesure et est conçu pour suivre les mouvements de vibration du premier tube de mesure, le premier dispositif à bobine étant disposé sur le deuxième tube de mesure,
ou pour lequel le deuxième dispositif magnétique est disposé sur le deuxième tube de mesure et est conçu pour suivre les mouvements de vibration du deuxième tube de mesure, le premier dispositif à bobine étant disposé sur le premier tube de mesure.

10. Débitmètre Coriolis selon l'une des revendications précédentes,
pour lequel le capteur (14) présente deux fils de raccordement (14.1) conçus pour être reliés à un circuit électronique de mesure/fonctionnement, lesquels fils de raccordement sont respectivement reliés à une extrémité de bobine, les fils de raccordement étant isolés électriquement et étant réunis, les fils de raccordement étant notamment torsadés après avoir été réunis,
ou pour lequel les fils de raccordement sont guidés vers une platine (17) avec des pistes électriquement conductrices (17.1), lesquelles pistes conductrices sont guidées parallèlement au moins dans une zone de contact « fil de raccordement - piste conductrice » et présentent un écart entre elles qui est inférieur à deux largeurs de piste conductrice.

11. Débitmètre Coriolis selon l'une des revendications précédentes,
pour lequel le couplage en série des bobines est réalisé au moyen d'un fil de liaison électriquement conducteur (14.2) ou par l'intermédiaire d'une platine (17) comportant une piste électriquement conductrice (17.1), les bobines étant reliées à la piste conductrice au moyen de fils de liaison électriquement conducteurs.

12. Débitmètre Coriolis selon l'une des revendications précédentes,
pour lequel une surface de section transversale des bobines est inférieure à 1 000 millimètres carrés, et notamment inférieure à 500 millimètres carrés et de préférence inférieure à 300 millimètres carrés,
et/ou pour lequel une surface de section transversale des aimants permanents est inférieure à 1 000 millimètres carrés, et notamment inférieure à 500 millimètres carrés et de préférence inférieure à 300 millimètres carrés.

13. Appareil de mesure à effet Coriolis destiné à la mesure d'un débit massique ou d'une densité d'un produit s'écoulant à travers des tubes de mesure du débitmètre Coriolis, lequel appareil comprend :
un débitmètre Coriolis (10) selon l'une des revendications précédentes ;
un circuit électronique de mesure/fonctionnement (77), lequel est conçu pour faire fonctionner l'au moins un excitateur et les capteurs, ainsi que pour fournir des valeurs mesurées du débit massique ou de la densité du produit ;
un boîtier électronique (80) destiné à loger le circuit électronique de mesure/fonctionnement.
